# EUROPÄISCHE PATENTSCHRIFT

(11) **EP 3 572 206 B1**
(45) Veröffentlichungstag und Bekanntmachung des Hinweises auf die Patenterteilung: **02.12.2020**
(21) Anmeldenummer: 18173543.2
(22) Anmeldetag: 22.05.2018
(51) Int. Cl.: B29C 48/10, B29C 48/255, B29C 48/885

(54) **KÜHLVORRICHTUNG MIT EINEM KÜHLGASRING UND EINER STRÖMUNGSLEITEINRICHTUNG**
COOLING DEVICE WITH A COOLING GAS RING AND A FLOW DEFLECTION DEVICE
DISPOSITIF DE REFROIDISSEMENT POURVU D'UN ANNEAU DE GAZ DE REFROIDISSEMENT ET D'UN DISPOSITIF DE GUIDAGE D'ÉCOULEMENT

(43) Veröffentlichungstag der Anmeldung: 27.11.2019
(73) Patentinhaber: Kdesign GmbH, 53639 Königswinter (DE)
(72) Erfinder: ZIMMERMANN, Richard, 53721 Siegburg (DE); FÄHLING, Gerd, 53783 Eitorf (DE)
(74) Vertreter: Neumann Müller Oberwalleney & Partner Patentanwälte

(56) Entgegenhaltungen:
- EP-A1- 1 736 297

## Beschreibung

Die vorliegende Erfindung betrifft eine Kühlvorrichtung zur Außenkühlung eines innendruckbeaufschlagten Folienschlauches bei der Herstellung von Blasfolien aus thermoplastischem Kunststoff nach dem Oberbegriff des Anspruchs 1.

Nach dem Stand der Technik sind Kühlvorrichtungen mit Kühlgasringen mit einem oder mehreren tangentialen Zufuhrstutzen bekannt, bei denen die tangentiale Zufuhr von Kühlgas in den Ringkanal für eine möglichst gleichmäßige Grundverteilung des Kühlgases sorgen soll, bevor das Kühlgas über Kühllippen zur Abkühlung des empfindlichen Folienschlauches austritt. Eine über den Umfang gleichmäßige Verteilung des Kühlgases ist dabei äußerst wichtig, da die Anblasung in der Schlauchbildungszone zwischen dem Schmelzeaustritt an einer Extrusionsdüse und der Einfriergrenze stattfindet. Aufgrund des komplexen Verstreckprozesses der abkühlenden Schmelze in dieser Schlauchbildungszone führt jede Ungleichmäßigkeit der Kühlgasströmung zu einer Störung des Dickenprofils der Schlauchfolie in Umfangsrichtung.

Aus der DE 10 2006 040 184 A1 ist ein Kühlgasring zur Außenkühlung eines innendruckbeaufschlagten Folienschlauches mit einem hornartig gebogenen Ringgehäuse bekannt. An dem Ringgehäuse ist nur ein einziger Luftzufuhrstutzen angeschlossen, über den Kühlgas in einen im Ringgehäuse ausgebildeten Ringkanal einströmen kann. Um das Kühlgas im Ringkanal möglichst gleichmäßig zu verteilen, weist der Ringkanal einen sich in Strömungsrichtung verjüngenden Strömungsquerschnitt auf. Radial innen ist der Ringkanal zu einer konzentrisch zu einer Mittelachse angeordneten Ringdüse hin offen ausgebildet, wobei zwischen dem Ringkanal und der Ringdüse eine Strömungsgleichrichteranordnung angeordnet ist.

Bei Ausgestaltung des Kühlgasringes mit nur einem einzigen Luftzufuhrstutzen muss stets eine Restmenge des einströmenden Kühlgases um mehr als 360° in Umfangsrichtung um die Mittelachse durch den Ringkanal strömen, damit das Kühlgas entlang der gesamten Ringdüse in etwa gleichmäßig verteilt austreten kann. Hierzu weist das Ringgehäuse zwischen dem Luftzufuhrstutzen und der Ringdüse eine Gehäusezunge auf, sodass zwischen der Gehäusezunge und der Ringdüse ein Durchtrittsspalt gebildet ist, um einen vollständigen Umlauf der Restströmung in Umfangsrichtung zu ermöglich. Als nachteilig hat sich jedoch gezeigt, dass das Zusammenführen der Restströmung an Kühlgas mit dem durch den Luftzufuhrstutzen nachströmenden Kühlgas zu einem lokal zwar begrenzten, aber ungleichmäßigem Austritt des Kühlgases aus der Ringdüse führen kann. Diese Fließstörungen im Kühlgasring führen zu einer über dem Umfang ungleichmäßigen Foliendicke.

Eine typische Maßnahme zur Verminderung einer solchen Fließstörung ist die Nachschaltung von Einbauten, die einen höheren Gegendruck beziehungsweise Druckverlust erzeugen. Dadurch sinkt jedoch der Luftdurchsatz des Kühlgasringes ab, weshalb zur Kompensation oftmals Gebläse mit deutlich höherem Druckniveau eingesetzt werden. Im Ergebnis führt dies allerdings zu einem erhöhten Energieverbrauch und zu einem unerwünschten Anstieg der Temperatur des Kühlgases.

Weiterhin sind Kühlgasringe mit mehreren Luftzufuhrstutzen bekannt, die in Umfangsrichtung gleichverteilt an dem Ringgehäuse angesetzt sind. Ein derartiger Kühlgasring ist beispielsweise aus der EP 1 736 297 A1, die den Oberbegriff des Anspruchs 1 offenbart, bekannt. Dadurch wird zwar eine insgesamt gleichmäßigere Verteilung des Kühlgases im Ringkanal erreicht, sodass das Kühlgas über dem Umfang gleichverteilter aus der Ringdüse austreten kann. Allerdings kann, je nach eingestelltem Luftdurchsatz, das im Ringkanal an einem der Luftzufuhrstutzen vorbeiströmende Kühlgas mit dem durch den jeweiligen Luftzufuhrstutzen nachströmenden Kühlgas zu Fließstörungen führen, welche wiederum das Dickenprofil der Blasfolie in Umfangsrichtung stören können. Nachteilig ist auch die Vielzahl an Schläuchen, die den Kühlgasring mit einem Gebläse verbinden.

Aufgabe der vorliegenden Erfindung ist es daher, eine verbesserte Kühlvorrichtung bereitzustellen, bei der das Kühlgas bei minimal gehaltenen Druckverlust gleichverteilter aus der Ringdüse austritt.

Diese Aufgabe ist erfindungsgemäß bei einem Kühlgasring zur Außenkühlung eines innendruckbeaufschlagten Folienschlauches bei der Herstellung von Blasfolien aus thermoplastischem Kunststoff der eingangs genannten Art dadurch gelöst, dass die Kühlvorrichtung weiterhin mindestens eine Strömungsleiteinrichtung mit feststehenden und/oder einstellbaren Leitelementen in dem mindestens einen Zulaufkanal aufweist, wobei die mindestens eine Strömungsleiteinrichtung derart angeordnet und ausgebildet ist, dass beim Strömen eines Kühlgases durch die Strömungsleiteinrichtung zumindest ein Teilstrom eines durch den zumindest einen Zulaufkanal in den Ringkanal einströmenden Kühlgases in Rotation um eine Strömungsachse versetzt wird.

Erfindungsgemäß ist somit vorgesehen, dass beim Strömen des Kühlgases durch die Strömungsleiteinrichtung eine Drehströmung in dem zumindest einen Zulaufkanal erzwungen wird. Das nachströmende Kühlgas rotiert somit bereits vor dem Einströmen in den Ringkanal um seine Strömungsachse, wodurch die Durchmischung des nachströmenden Kühlgases mit dem sich bereits im Ringkanal befindlichem Kühlgas optimiert wird. Die Drehströmung kann auch als walzenförmige Gasströmung bezeichnet werden. Im Ergebnis wird dadurch ein gleichmäßiges Strömungsprofil im Ringkanal erzeugt, sodass das Kühlgas entlang des gesamten Umfangs gleichmäßig verteilt aus der Ringdüse austreten kann.

Im Betrieb der Kühlvorrichtung strömt das Kühlgas über den zumindest einen Zulaufkanal in den Ringkanal. Zumindest ein Zulaufkanal bedeutet, dass an dem Ringkanal nur ein einziger Zulaufkanal, wie in der DE 10 2006 040 184 A1 gezeigt, oder mehrere Zulaufkanäle, wie in der EP 1 736 297 A1 gezeigt, angesetzt sein können. Grundlegendes Prinzip ist dabei, dass jedem Zulaufkanal eine eigene Strömungsleiteinrichtung zugeordnet ist, sodass das über den jeweiligen Zulaufkanal in den Ringkanal einströmende Kühlgas vor Eintritt in den Ringkanal in eine Rotation um die jeweilige Strömungsachse versetzt wird.

Gemäß einer Ausgestaltung der vorliegenden Erfindung ist die mindestens eine Strömungsleiteinrichtung zur Erzeugung der Rotation um die Strömungsachse in einem Randbereich des zumindest einen Zulaufkanals ausgebildet. Auf diese Weise kann gezielt der an der Kanalwand des zumindest einen Zulaufkanals, sprich dem Randbereich, entlang strömende Teilstrom des Kühlgases in Rotation um die Strömungsachse versetzt werden, wogegen ein Teilstrom des Kühlgases, der einen vom Randbereich umschlossenen mittigen Bereich des zumindest einen Zulaufkanals durchströmt, nicht durch die mindestens eine Strömungsleiteinrichtung in Rotation versetzt wird. Hierzu kann die mindestens eine Strömungsleiteinrichtung jeweils eine zentrale Ausnehmung aufweisen, durch der Teilstrom des Kühlgases ungehindert durchströmen kann. Grundsätzlich möglich ist auch, dass die mindestens eine Strömungsleiteinrichtung sich über den gesamten Strömungsquerschnitt des jeweiligen Zulaufkanals erstreckt, sodass der gesamte Kühlgasstrom in dem jeweiligen Zulaufkanal in eine Rotation um die Strömungsachse versetzt wird.

In vorteilhafter Weise ist die mindestens eine Strömungsleiteinrichtung als eigenständiges Bauteil ausgebildet. Dadurch kann die mindestens eine Strömungsleiteinrichtung auf einfache Weise in den zumindest einen Zulaufkanal eingesetzt oder wieder entnommen werden. Somit kann die mindestens eine Strömungsleiteinrichtung in einer herkömmlichen Kühlvorrichtung nachgerüstet und zu Reinigungszwecken entnommen werden. Somit ist von Vorteil, dass die mindestens eine Strömungsleiteinrichtung auch in herkömmlichen Kühlvorrichtungen erfindungsgemäß verwendet werden kann.

Die mindestens eine Strömungsleiteinrichtung weist mehrere Leitelemente auf, um die Drehströmung in dem zumindest einen Zulaufkanal zu erzwingen. Hierzu können die Leitelemente in dem zumindest einen Zulaufkanal feststehend sein. Das heißt, die Leitelemente können fest gehalten sein, sodass sie sich nicht um die Strömungsachse drehen und sich nicht entlang der Strömungsachse verlagern können. Ebenso kann die mindestens eine Strömungsleiteinrichtung verstellbare Leitelemente aufweisen, um die Gasströmung des durch den zumindest einen Zulaufkanal strömenden Kühlgases verändern zu können. Dabei kann beispielsweise der Anstellwinkel der Leitelemente zur Gasströmung, die Ausrichtung der Leitelemente zu den feststehenden Leitelementen, deren Eindringtiefe in den jeweiligen Zulaufkanal verstellbar sein. Für den Fall, dass die mindestens eine Strömungsleiteinrichtung sowohl feststehende als auch verstellbare Leitelemente aufweist, können die verstellbaren Leitelemente in Strömungsrichtung den feststehenden Leitelementen vor- und/oder nachgeschaltet sein. Weiterhin kann zumindest eine Teilmenge der Leitelemente in Umfangsrichtung um die Strömungsachse verteilt angeordnet sein. Zusätzlich oder alternativ kann eine Teilmenge der Leitelemente in Strömungsrichtung hintereinander angeordnet sein.

Zumindest eine Teilmenge der Leitelemente kann beispielsweise aus Blechen hergestellt sein. Vorzugsweise ist zumindest eine Teilmenge der Leitelemente plattenförmig oder gebogen ausgebildet. Auf diese Weise wird eine besonders einfach herzustellende und effiziente Strömungsleiteinrichtung bereitgestellt. Weiterhin können die Leitelemente Schaufeln mit einem Strömungsprofil, insbesondere einem bogenförmigen Profil umfassen. Insbesondere kann ein der Strömung ausgesetzter Abschnitt der Leitelemente durchgehend geschlossen, geschlitzt oder gelocht gestaltet sein. In bevorzugter Weise sind sämtliche Leitelemente der jeweiligen, zumindest einen Strömungsleiteinrichtung identisch ausgebildet.

Zweckmäßigerweise ist zumindest eine Teilmenge der Leitelemente mit einem Anstellwinkel von etwa 30° bis 60° zur Strömungsachse angeordnet. Durch die Anordnung der Leitelemente in dem vorgenannten Winkelbereich wird das durch den zumindest einen Zulaufkanal nachströmende Kühlgas besonders gut mit der im Ringkanal an dem jeweiligen Zulaufkanal vorbeiströmenden Restströmung an Kühlgas durchmischt, wodurch besonders gute Ergebnisse bei der Vergleichmäßigung der Strömung im Ringkanal erzielt werden. Der jeweilige Anstellwinkel ist als Winkel zwischen einer gedachten Gerade, die eine der Strömung zugewandte Vorderkante mit einer der Strömung abgewandten Hinterkante des jeweiligen Leitelements verbindet, und der Strömungsachse zu verstehen. Die gedachte Gerade kann auch als Profilsehne bezeichnet werden.

Des Weiteren kann vorgesehen sein, dass die mindestens eine Strömungsleiteinrichtung zumindest einen rohrförmigen Grundkörper aufweist. An dem zumindest einen Grundkörper kann zumindest eine Teilmenge der Leitelemente gehalten sein. Der zumindest eine Grundkörper kann in dem zumindest einen Zulaufkanal eingeschoben oder als Teil des Zulaufkanals zum Beispiel an einem Zulaufstutzen des Kühlringes oder einem Schlauch angesetzt sein.

Die Kühlvorrichtung weist entweder ausschließlich den einen Zulaufkanal oder mehrere der Zulaufkanäle auf.

Gemäß der ersten Alternative weist die Kühlvorrichtung somit ausschließlich den einen Zulaufkanal auf. Das Ringgehäuse weist zur Einleitung von Kühlgas in den Ringkanal ausschließlich eine einzige Einlauföffnung auf, an die der Zulaufkanal mit einem am Ringgehäuse angesetzten Zulaufstutzen angebunden ist. Das heißt, der Ringkanal wird nur über den einen einzigen Zulaufkanal mit Kühlgas versorgt. In Kombination mit der Strömungsleiteinrichtung wurden bei dem Kühlgasring mit nur einem einzigen Zulaufkanal besonders gute Ergebnisse erzielt. Denn die bei herkömmlichen Kühlringen mit nur einem Zulaufkanal auftretenden Strömungs-Unstetigkeiten im Zusammenfluss der umlaufenden Restströmung an Kühlgas mit dem über den Zulaufkanal nachströmenden Kühlgas treten aufgrund der durch die Strömungsleiteinrichtung erzwungenen Rotation des nachströmenden Kühlgases um seine Strömungsachse nicht auf. Insbesondere zusammen mit einem tangential einlaufenden Zufuhrstutzen wird somit ein Kühlvorrichtung bereitgestellt, die schon bei sehr geringem Gegendruck eine optimale Luftverteilung gewährleistet, unabhängig vom eingestellten Betriebspunkt, der sich aus Luftmenge und Gegendruck der Ringdüse und sich üblicherweise daran anschließender Kühllippen ergibt.

Weiterhin kann der Strömungsquerschnitt des Ringkanals bei dem Kühlgasring mit nur einem einzigen Zulaufkanal in Umfangsrichtung um die Mittelachse abnehmen. Insbesondere kann der Strömungsquerschnitt kontinuierlich oder gestuft abnehmen. Der Strömungsquerschnitt ist insbesondere an der Einlauföffnung des Zulaufkanals in den Ringkanal maximal, wobei der Strömungsquerschnitt in Strömungsrichtung abnimmt. Das Ringgehäuse kann, dem Ringkanal folgend, eine hornartige Grundform mit einer konzentrisch zur Mittelachse gestalteten Ausnehmung aufweisen.

Gemäß der zweiten Alternativeweist das Ringgehäuse zur Einleitung von Kühlgas in den Ringkanal mehrere Einlauföffnungen auf, an die jeweils einer der Zulaufkanäle mit jeweils einem am Ringgehäuse angesetzten Zulaufstutzen angebunden ist. Vorzugsweise sind die Zulaufstutzen in Umfangsrichtung um die Mittelachse gleichsinnig in den Ringkanal einlaufend angesetzt. Auf diese Weise kann das Kühlgas gleichmäßig über den Umfang verteilt in den Ringkanal einströmen. Der Kühlgasring kann zwei oder mehr, insbesondere bis zu 20 Zulaufkanäle aufweisen. Bei der Ausgestaltung des Kühlgasringes mit mehreren Zulaufkanälen versteht sich, dass jedem der Zulaufkanäle eine eigene Strömungsleiteinrichtung zugeordnet ist.

Sowohl für die erste Alternative mit dem Ringkanal, der nur eine einzige Einlauföffnung aufweist, als auch für die zweite Alternative mit dem Ringkanal, der mehrere Einlauföffnungen aufweist, gilt weiterhin, dass der zumindest eine Zulaufstutzen etwa tangential von außen an dem Ringgehäuse angesetzt sein kann. Dadurch wird das durch den zumindest einen Zulaufstutzen in den Ringkanal einströmende Kühlgas in eine Drallströmung versetzt. Als Drallströmung wird eine Strömung verstanden, die sich um die Mittelachse dreht. Davon zu unterscheiden ist die Drehströmung, respektive walzenförmige Strömung, die durch die mindestens eine Strömungsleiteinrichtung erzeugt wird. Hierbei handelt es sich um eine Strömung, bei der das durch den jeweiligen Zulaufkanal strömende Kühlgas um die Strömungsachse rotiert. Die Strömungsachse und die Mittelachse haben keinen gemeinsamen Schnittpunkt.

Weiterhin kann die mindestens eine Strömungsleiteinrichtung in oder an dem zumindest einen Zulaufstutzen angeordnet sein. Durch die Anordnung der mindestens einen Strömungsleiteinrichtung in direkter Nähe zu der jeweiligen Einlauföffnung in den Ringkanal wurden besonders gute Ergebnisse bei der Durchmischung des nachströmenden Kühlgases mit der Restströmung an Kühlgas im Ringkanal erzielt. Des Weiteren kann der zumindest eine Zulaufkanal wenigstens einen Schlauch aufweisen, in dem die mindestens eine Strömungsleiteinrichtung eingesetzt sein kann. Ebenso kann die mindestens eine Strömungsleiteinrichtung zwischen zwei Schläuchen angeordnet sein. Weiterhin kann die mindestens eine Strömungsleiteinrichtung zwischen dem Ringgehäuse, insbesondere dem zumindest einen Zulaufstutzen, und dem zugehörigen Schlauch angeordnet sein. Die mindestens eine Strömungsleiteinrichtung kann beispielsweise mittels herkömmlicher Rohrschellen an dem jeweils angrenzenden Teil des Zulaufkanals, insbesondere dem Schlauch und/oder dem Zulaufstutzen, befestigt sein.

Durch das Ansetzen des zumindest einen Zulaufkanals, zumindest in etwa tangential, von außen an das Ringgehäuse wird das im Betrieb des Kühlringes in den Ringkanal einströmende Kühlgas in eine Drallströmung versetzt. Der beim Anblasen der Blasfolie mit Kühlgas jedoch unerwünschte Drall kann durch eine dem Ringkanal nachgeschaltete Strömungsgleichrichteranordnung abgebaut werden. Insofern kann zwischen dem Ringkanal und der Ringdüse die Strömungsgleichrichteranordnung angeordnet sein, die vorzugsweise durch mehrere radial ausgerichtete und umfangsverteilte Strömungskanäle gebildet ist. Am Austritt der Strömungskanäle strömt das Kühlgas somit in radialer Richtung aus.

Die Strömungskanäle können beispielsweise schmale, radial gerichtete Kanäle aufweisen, deren Länge ein Vielfaches von deren Breite beträgt. Ebenso können die Strömungskanäle durch Bohrungen, insbesondere runde Bohrungen, oder wabenförmige Kanäle gebildet sein. Die Strömungskanäle können dabei einen rechteckigen oder quadratischen Querschnitt oder einen runden Querschnitt aufweisen. Der Strömungsquerschnitt der einzelnen Strömungskanäle kann konstant sein oder sich in radialer Richtung verändern. Weiterhin kann der Strömungsquerschnitt einstellbar sein. Eine derartige Einstellbarkeit ist beispielsweise in der EP 1 736 297 A1 gezeigt.

Soweit der Begriff Zulaufkanal verwendet wird, ist hiermit ein das Kühlgas leitender Kanal gemeint, der zwischen einer Druckquelle, beispielsweise einem Gebläse, und der Einlauföffnung des Ringkanals angeordnet sein kann. Der zumindest eine Zulaufkanal kann starre Teile, wie beispielsweise einen am Ringgehäuse angesetzten Zulaufstutzen, und/oder flexible Teile, wie beispielsweise ein Schlauch, aufweisen. Der zumindest eine Zulaufkanal kann zumindest ein insbesondere rohrförmiges und/oder schlauchförmiges Teil aufweisen. Der Querschnitt des zumindest einen Zulaufkanals kann entlang seiner Längserstreckung gleichbleibend oder veränderlich sein. Insbesondere kann der Querschnitt des zumindest einen Zulaufkanals zumindest abschnittsweise rechteckig, insbesondere quadratisch, rund oder oval sein.

Soweit vorstehend der Begriff Ringdüse verwendet wird, ist hiermit nicht notwendig der unmittelbare Kühlgasaustritt aus dem Ringgehäuse gemeint. Vielmehr kann die Ringdüse mit einer oder mehreren Kühllippen bestückt sein, die an die Ringdüse auswechselbar angeschraubt sein können. Hiermit kann eine leichte Anpassung an verschiedene Folienschlauchdurchmesser erfolgen, ohne dass auf einen anderen Kühlgasring übergewechselt werden muss.

Ein bevorzugtes Ausführungsbeispiel der Erfindung wird in den Zeichnungen dargestellt und nachstehend beschrieben. Hierin zeigt:
- Figur 1: eine Kühlvorrichtung gemäß einer ersten Ausführungsform in Ansicht in Richtung der Mittelachse im Längsschnitt;
- Figur 2: eine vergrößerte Einzelheit aus Figur 1;
- Figur 3: eine Teilansicht der Kühlvorrichtung aus Figur 1 im Radialschnitt entlang der in Figur 1 gezeigten Schnittlinie III-III;
- Figur 4: eine Seitenansicht einer Strömungsleiteinrichtung aus Figur 1;
- Figur 5: eine Teilansicht einer Kühlvorrichtung gemäß einer zweiten Ausführungsform in Schnittansicht, wobei eine Strömungsleiteinrichtung in einem Zulaufstutzen eingesetzt ist;
- Figur 6: eine Teilansicht einer Kühlvorrichtung gemäß einer dritten Ausführungsform in Schnittansicht, wobei eine Strömungsleiteinrichtung zwischen einem Schlauch und einem Zulaufstutzen angeordnet ist;
- Figur 7: eine Teilansicht einer Kühlvorrichtung gemäß einer vierten Ausführungsform in Schnittansicht, wobei eine Strömungsleiteinrichtung in einem Schlauch eingesetzt ist;
- Figur 8: eine Teilansicht einer Kühlvorrichtung gemäß einer dritten Ausführungsform in Schnittansicht, wobei eine Strömungsleiteinrichtung zwischen zwei Schläuchen angeordnet ist;
- Figur 9: eine Folienblasanlage mit einer erfindungsgemäßen Kühlvorrichtung im Vertikalschnitt entlang der Mittelachse;
- Figur 10: eine Teilansicht einer alternativen Folienblasanlage mit einer erfindungsgemäßen Kühlvorrichtung; und
- Figur 11: eine Kühlvorrichtung gemäß einer dritten Ausführungsform in Ansicht in Richtung der Mittelachse im Teilschnitt.

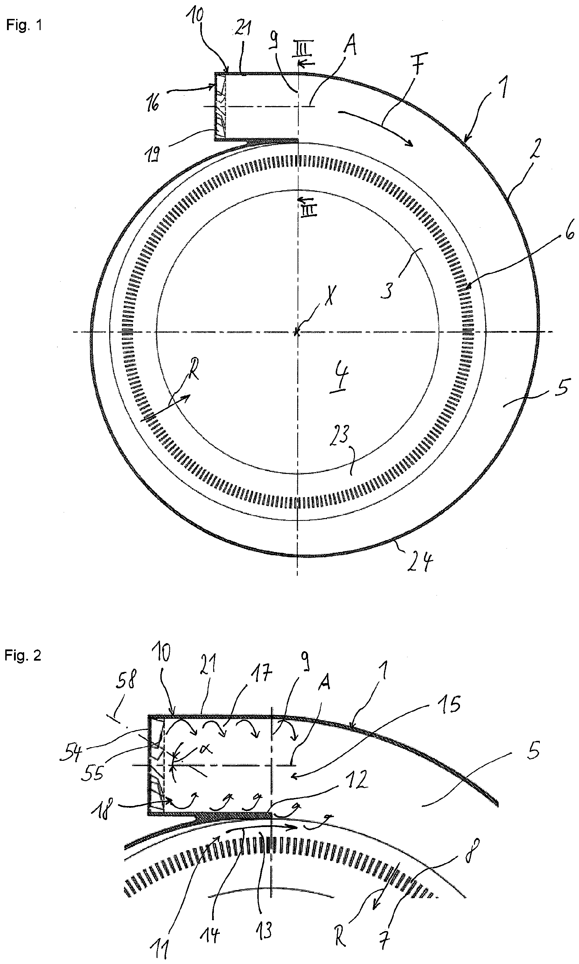

Die Figuren 1 bis 3 zeigen eine erfindungsgemäße Kühlvorrichtung gemäß einer ersten Ausführungsform der vorliegenden Erfindung. Die Kühlvorrichtung dient in an sich bekannter Weise der Außenkühlung eines innendruckbeaufschlagten Folienschlauches bei der Herstellung von Blasfolien aus thermoplastischem Kunststoff.

Die Kühlvorrichtung weist einen Kühlgasring 1 mit einem Ringgehäuse 2 auf, das eine konzentrisch zu einer Mittelachse X angeordnete Ringdüse 3 aufweist. Die Ringdüse 3 umschließt eine zentrale Ausnehmung 4 des Ringgehäuses 2, durch die bei Herstellung von Blasfolien der Folienschlauch geführt wird. Innenliegend im Ringgehäuse 2 ist ein Ringkanal 5 ausgebildet, der sich in Umfangsrichtung um die Mittelachse X erstreckt und radial innen in die nach radial innen offene Ringdüse 3 übergeht. Zwischen dem Ringkanal 5 und der Ringdüse 3 ist eine Strömungsgleichrichteranordnung 6 angeordnet, die, wie hier gezeigt, aus einer Vielzahl von radial verlaufenden Stegwandungen 7 gebildet ist, zwischen denen jeweils einzelne Strömungskanäle 8 liegen.

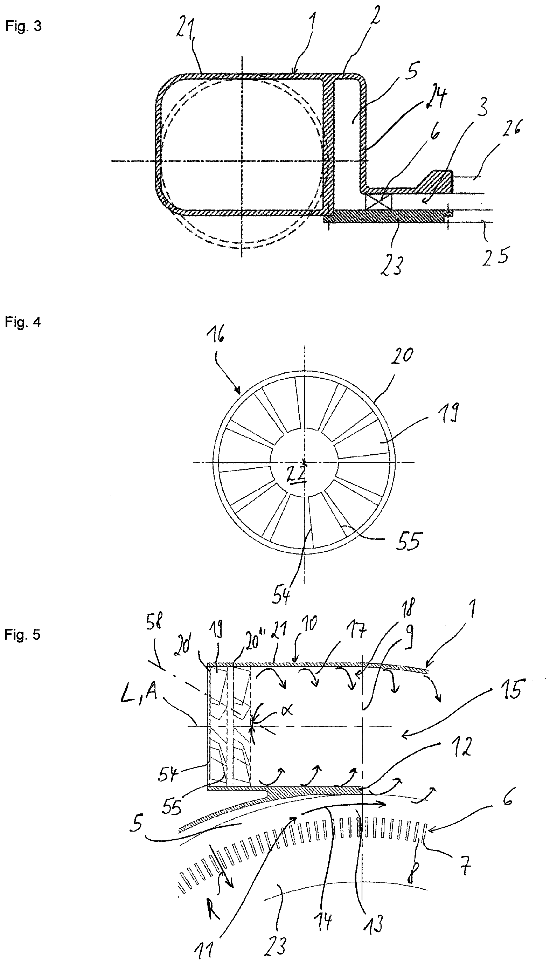

Der Ringkanal 5 weist nur eine einzige Einlauföffnung 9 zur Versorgung des Kühlgasringes 1 mit Kühlgas auf. An die Einlauföffnung 9 ist ein Zulaufkanal 10 angeschlossen, der, hier, einen am Ringgehäuse 2 angeformten Zulaufstutzen 21 aufweist. Der Zulaufstutzen 21 ist von außen an das Ringgehäuse 2, zumindest in etwa tangential, angesetzt. Der Zulaufstutzen 21 weist, hier, eine eingangsseitig zylindrische Grundform auf, die sich entlang einer Längsachse A erstreckt. Entlang der Längsachse A geht der zunächst runde Querschnitt des Zulaufstutzens 21 in einen rechteckigen Querschnitt mit gerundeten Ecken in die Einlauföffnung 9 über. In der Figur 3 ist der eingangsseitig runde Querschnitt des Zulaufstutzens 21 mit gestrichelten Linien gezeigt. Der in der Figur 3 gezeigte Schnitt verläuft durch die Einlauföffnung 9. Grundsätzlich könnte der Zulaufstutzen 21 eingangsseitig auch konisch zulaufend ausgebildet ein konisches Reduzierstück könnte auf den Zulaufstutzen 21 aufgeschoben sein, um einen Kühlgas-Schlauch 37 des Zulaufkanals 10 anschließen zu können. Ebenso könnte der Zulaufstutzen 21 statt der hier geradlinigen Ausgestaltung auch eine gebogene Grundform aufweisen.

Der Zulaufkanal 10 mündet über die Einlauföffnung 9 in den Ringkanal 5. In den Figuren 1 und 2 ist erkennbar, dass der Strömungsquerschnitt des Ringkanals 5 in Umfangsrichtung um die Mittelachse X kontinuierlich abnimmt. Dabei ist der Strömungsquerschnitt an der Einlauföffnung 9 maximal und nimmt in Strömungsrichtung, die in der Figur 1 mit dem Pfeil F dargestellt ist, ab. Auf diese Weise läuft der Ringkanal 5 in einen Endbereich 11 des Ringkanals 5 spitz zu. In Strömungsrichtung F am Ende des Endbereichs 11 des Ringkanals 5 ist zwischen einer Gehäusezunge 12 des Ringgehäuses 2 und der Ringdüse 3 beziehungsweise der Strömungsgleichrichteranordnung 6 ein Durchgangsspalt 13 gebildet. Auf diese Weise ist der Ringkanal 5 in Umfangsrichtung um die Mittelachse X ringförmig geschlossen ausgebildet. Im Betrieb des Kühlringes 1 strömt ein Großteil des durch den Zulaufkanal 10 eingeblasenen Kühlgases über den Umfang verteilt radial nach innen zur Ringdüse 3 ab. Eine Restströmung 14 an Kühlgas tritt jedoch durch den Durchgangsspalt 13 wieder in einen Anfangsbereich 15 des Ringkanals 5 ein. Das Ringgehäuse 2 folgt dem sich in Strömungsrichtung F kontinuierlich verjüngenden Ringkanal 5 und weist entsprechend eine hornartig gebogene Grundform auf, wie sie deutlich in der Figur 1 erkennbar ist.

Um die im Betrieb durch den Zulaufkanal 10 in den Ringkanal 5 nachströmende Zulaufströmung 17 an Kühlgas mit der Restströmung 14 an Kühlgas, die durch den Durchgangsspalt 13 wieder in den Anfangsbereich 15 eintritt, zu durchmischen, ist eine Strömungsleiteinrichtung 16 derart angeordnet und ausgebildet, dass ein am Randbereich 18 des Zulaufstutzens 21 vorbeiströmender Teilstrom des Zulaufstroms 17 an Kühlgas in Rotation um eine Strömungsachse, die hier der Längsachse A des Zulaufstutzens 21 entspricht, versetzt wird.

Die erfindungsgemäße Strömungsleiteinrichtung 16 ist eine separate Baueinheit, die in der Figur 4 gezeigt ist. Die Strömungsleiteinrichtung 16 weist mehrere in Umfangsrichtung um die Längsachse A gleichverteilt angeordnete Leitelemente 19 auf. Die Leitelemente 19 sind radial außen an einem Ringkörper 20 gehalten. Weiterhin sind die Leitelemente 19 plattenförmig ausgebildet. Jedes der Leitelemente 19 weist eine Vorderkante 54, die der Zulaufströmung 17 zugewandt ist, und eine Hinterkante 55, die von der Zulaufströmung 17 abgewandt ist, auf. Eine gedachte Linie 58, die die Vorderkante 54 mit der Hinterkante 55 des jeweiligen Leitelementes 19 verbindet, schließt jeweils mit der Strömungsachse A einen Winkel α von etwa 30 Grad bis 60 Grad ein. Der Winkel α kann auch als Anstellwinkel bezeichnet werden. Weiterhin begrenzen die Leitelemente 19 eine zentrale Durchgangsöffnung 22.

Die Strömungsleiteinrichtung 16 ist, wie in den Figuren 1 und 2 gezeigt, durch das offene Ende des Zulaufstutzens 21 in diesen eingesetzt. Somit sind die Leitelemente 19 in dem Zulaufstutzen 21 festgesetzt. Erkennbar ist, dass durch die Anordnung der Leitelemente 16 an dem Ringkörper 20 eine Verwirbelung des einströmenden Kühlgases nur entlang des Randbereiches 18 im Zulaufstutzen 21 erzeugt wird, wogegen das Kühlgas die zentrale Durchgangsöffnung 22 der Strömungsleiteinrichtung 16 weitestgehend ungehindert durchströmen kann. Grundsätzlich könnten die Leitelemente 19 auch direkt an der Kanalwand des Zulaufstutzens 21 befestigt sein, sodass dann auf den Ringkörper 20 verzichtet werden könnte.

Der Kühlgasring 1 ist, wie in der Figur 3 zu erkennen ist, aus einer Ringplatte 23, die auch als Bodenplatte bezeichnet werden kann, und einem Ringtrog 24 zusammengesetzt. Der Zulaufstutzen 21 kann, wie hier gezeigt, einstückig am Ringtrog 24 angeformt sein. Die Strömungsgleichrichteranordnung 6 kann ebenfalls am Ringtrog 24 befestigt sein. Die Ringdüse 3 wird, hier, von der Ringplatte 23 und, in der Figur 3 lediglich schematisch angedeutet, von an der Ringplatte 23 austauschbar gehaltenen Ringteilen 25 sowie von einem an dem Ringtrog 24 austauschbar gehaltenen Kühllippenhalter 26 für weitere Ringteile der Kühllippen gebildet.

Im Betrieb wird das in den Zulaufstutzen 21 einströmende Kühlgas durch die Strömungsleiteinrichtung 16 gedrückt. Dabei zwingen die mit dem Anstellwinkel α zur Strömungsachse A angestellten Leitelemente 19 das Kühlgas in eine Drehströmung, sodass im Zulaufkanal 17 entlang des Randbereiches 18 eine walzenförmige Zulaufströmung 17 erzeugt wird. Die walzenförmige Zulaufströmung 17, die um die Strömungsachse A rotiert, erstreckt sich durch die Einlauföffnung 9 in den Anfangsbereich 15 des Ringkanals 5. Dort durchmischt sich die rotierende Zulaufströmung 17 mit der durch den Durchgangsspalt 13 durchströmenden Restströmung 14 an Kühlgas. Das im Ringkanal 5 über den Umfang gleichverteilte Kühlgas tritt entlang der Ringdüse 3 gleichmäßig radial nach innen aus, wobei es in den Strömungskanälen 8 der Strömungsgleichrichteranordnung 6 in eine radiale Richtung umgelenkt wird. Die über den Umfang gleichmäßig verteilte Radialströmung ist der Übersichtlichkeit halber nur an einer Stelle mit dem Pfeil R dargestellt.

Die Figur 5 zeigt einen erfindungsgemäßen Kühlgasring 1 gemäß einer zweiten Ausführungsform der vorliegenden Erfindung, wobei zur Verdeutlichung des einzigen Unterschiedes gegenüber der in den Figuren 1 bis 3 gezeigten ersten Ausführungsform ein vergrößerter Teilausschnitt des Zulaufstutzens 21 gezeigt ist. Diese Ausführungsform entspricht somit weitestgehend derjenigen gemäß den Figuren 1 bis 3, auf deren Beschreibung insofern Bezug genommen wird. Dabei sind gleiche Einzelheiten mit gleichen Bezugszeichen versehen wie in den Figuren 1 bis 3.

Der einzige Unterschied besteht in der Ausgestaltung der Strömungsleiteinrichtung 16, die gemäß der in der Figur 5 gezeigten zweiten Ausführungsform der vorliegenden Erfindung zwei in Strömungsrichtung F hintereinander angeordnete Ringkörper 20', 20" aufweist, an dem jeweils in Umfangsrichtung um die Längsachse A gleichverteilt angeordnete Leitelemente 19', 19" gehalten sind. Entsprechend weist die Strömungsleiteinrichtung 16 zwei von den in der Figur 4 gezeigten Ringkörpern 20 mit den Leitelementen 19 auf. Die beiden Ringkörper 20', 20" können baulich getrennt voneinander sein, um beispielsweise eine Verstellung der Leitelemente 19', 19" gegeneinander zu ermöglichen. Ebenso können die beiden Ringkörper 20', 20" auch einen durchgehenden Ringkörper bilden, sodass die beiden Ringkörper 20', 20" Ringkörperabschnitte eines gemeinsamen Ringkörpers sein können.

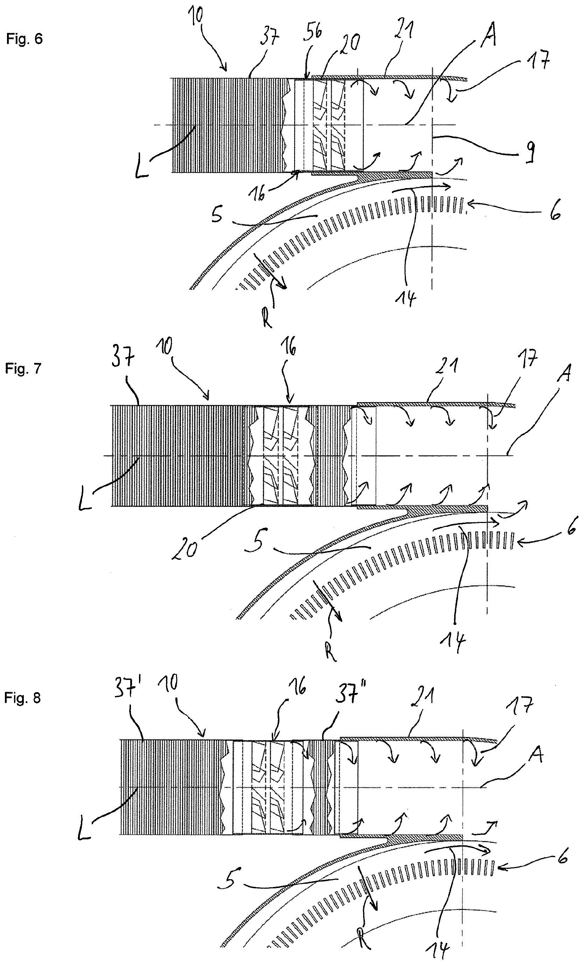

In den Figuren 6 bis 8 sind lediglich unterschiedliche Anordnungen der Strömungsleiteinrichtung 16 gezeigt. In der Figur 6 ist gezeigt, dass die Strömungsleiteinrichtung 16 in den Zulaufstutzen 21 eingeschoben sein kann. Der Ringkörper 20 steht aus dem Zulaufstutzen 21 hervor und bildet eine Anlagefläche 56, auf die ein Schlauch 37 des Zulaufkanals 10 aufgeschoben und, beispielsweise mittels einer nicht gezeigten Rohrschelle, befestigt ist. In der Figur 7 ist gezeigt, dass die Strömungsleiteinrichtung 16 im Schlauch 37 eingeschoben sein kann, wobei der Schlauch 37 wiederum mit dem Zulaufstutzen 21 verbunden ist. In der Figur 8 ist gezeigt, dass die Strömungsleiteinrichtung 16 zwischen zwei Schläuchen 37', 37" des Zulaufkanals 10 angeordnet sein kann. Die in den Figuren 1 bis 3 und 5 bis 8 gezeigten Anordnungsmöglichkeiten der Strömungsleiteinrichtung 16 können grundsätzlich auch miteinander kombiniert werden. Es versteht sich, dass auch die in den Figuren 1 bis 2 und 4 gezeigte Strömungsleiteinrichtung 16 an den in den Figuren 6 bis 8 gezeigten Positionen angeordnet werden kann.

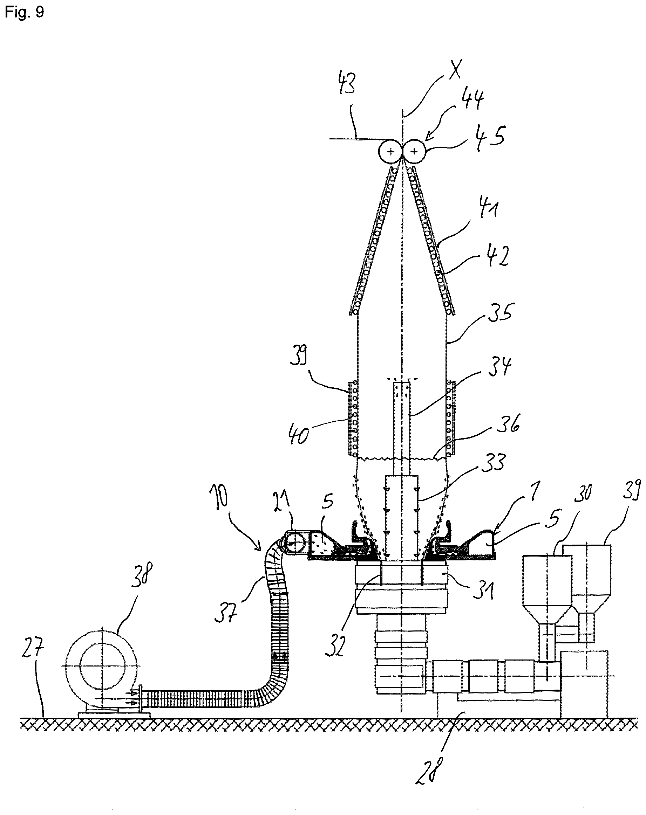

In der Figur 9 ist eine Folienblasanlage mit einer erfindungsgemäßen Kühlvorrichtung im Vertikalschnitt gezeigt. Die Kühlvorrichtung kann gemäß der in den Figuren 1 bis 3 gezeigten ersten Ausführungsform der vorliegenden Erfindung oder gemäß der anhand der Figur 5 bis 8 erläuterten weiteren Ausführungsformen der vorliegenden Erfindung gestaltet sein.

Auf einem Fundament 27 steht ein Extruder 28 für thermoplastischen Kunststoff, an dem zwei Aufgabetrichter 29, 30 zu erkennen sind. An dem Extruder 28 ist ein Folienblaskopf 31 mit der senkrechten Mittelachse X angeordnet, an dem eine konzentrisch zur Mittelachse X liegende ringförmige Extrusionsdüse 32 sichtbar wird. Zentral am Folienblaskopf 31 sind weiterhin eine Gaseinleitanordnung 33 sowie ein Gasabsaugrohr 34 angebracht. Hiermit wird ein innerer Überdruck in einem Folienschlauch 35 erzeugt, der aus der Extrusionsdüse 32 austritt, infolge des Überdrucks sich zunächst erweitert und an einer Frostgrenze 36 in einen Zustand übergeht, in dem eine weitere plastische Verformung des Materials nicht mehr möglich ist. Die Gasleitanordnung 33 kann zur Innenkühlung des Schlauchfolienmaterials beitragen, wogegen der Kühlgasring 1 der Außenkühlung dient.

Der Kühlgasring 1 ist mit dem Schlauch 37 verbunden, der endseitig auf den Zulaufstutzen 21 aufgeschoben ist. Das andere Ende des Schlauches 37 ist mit einem Gebläse 38 verbunden, mittels dem Kühlgas in den Kühlgasring 1 gedrückt wird.

Oberhalb der Frostgrenze 36 ist eine mechanische Kalibriervorrichtung 39 respektive Führungsvorrichtung erkennbar, in der der Foliendurchmesser stabilisiert wird. Die Kalibriervorrichtung 39 weist eine Vielzahl von Rollen 40 auf, die im Wesentlichen ringförmig am Folienschlauch 35 anliegen. Oberhalb der Kalibriervorrichtung 39 ist eine Flachlegevorrichtung 41 gezeigt, die ebenfalls eine Vielzahl von Rollen 42 umfasst. Die Flachlegevorrichtung 41 ist jedoch abweichend von der Kalibriervorrichtung 39 etwa keilförmig gestaltet und formt aus dem runden Folienschlauch 35 eine doppellagige, an den Kanten verbundene Flachfolie 43. Oberhalb der Flachlegevorrichtung 41 ist eine Abzugsvorrichtung 44 mit zwei Abzugsrollen 45 erkennbar, die den Folienschlauch fördern und zusammendrücken. Der Folienschlauch wird als doppellagige Flachfolie 43 weitergeführt, gegebenenfalls geschnitten und aufgewickelt.

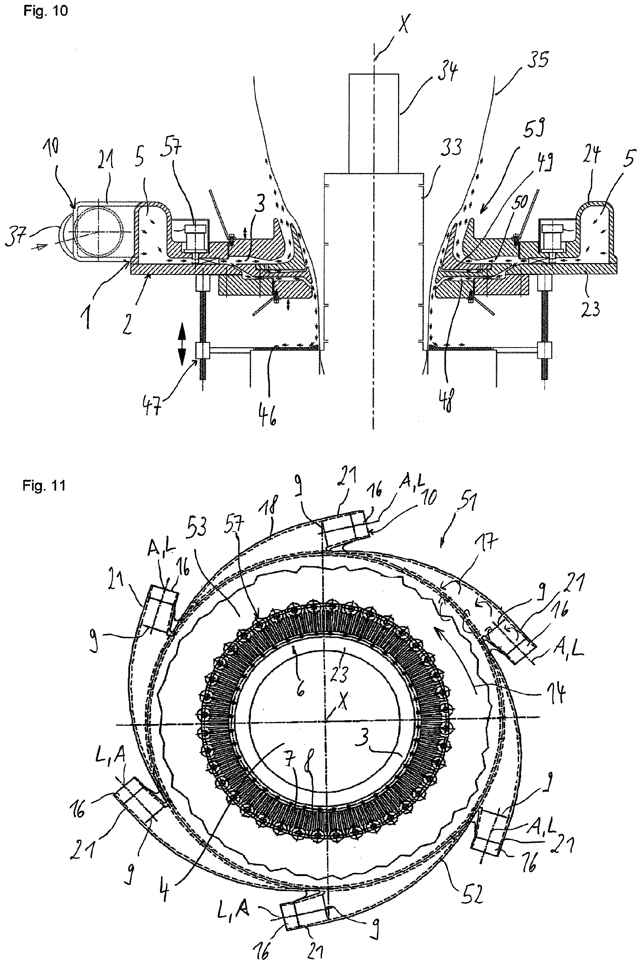

In der Figur 10 ist eine abgewandelte Folienblasanlage mit einer erfindungsgemäßen Kühlvorrichtung im Vertikalschnitt gezeigt. Die Kühlvorrichtung kann gemäß der in den Figuren 1 bis 3 gezeigten ersten Ausführungsform der vorliegenden Erfindung oder gemäß der anhand der Figuren 5 bis 8 erläuterten weiteren Ausführungsformen der vorliegenden Erfindung gestaltet sein.

Die in der Figur 10 gezeigte Folienblasanlage unterscheidet sich von der in der Figur 9 dargestellten Folienblasanlage lediglich in der Ausgestaltung des Kühlgasringes, weshalb zur Verdeutlichung des einzigen Unterschiedes lediglich ein vergrößerter Teilausschnitt der Folienblasanlage gezeigt ist. Diese Ausführungsform entspricht somit weitestgehend derjenigen gemäß der Figur 9, auf deren Beschreibung insofern Bezug genommen wird. Dabei sind gleiche Einzelheiten mit gleichen Bezugszeichen versehen wie in der Figur 9.

Auf dem Folienblaskopf 31 ist eine optionale Wärmeisolierscheibe 46 aufgelegt. Mit Abstand vom Folienblaskopf 31 ist der Kühlgasring 1 dargestellt, der über eine höhenverstellbare Halterung 47 mit dem Folienblaskopf 31 verbunden ist. An der Ringdüse 3 sind Kühllippen 59 gehalten, die sich in einen unteren Kühllippenabschnitt 48 und in zwei darüber liegende Kühllippenabschnitte 49, 50 aufteilen. Über den unteren Kühllippenabschnitt 48 strömt das Kühlgas durch eine Austrittsöffnung, die entgegen der Abzugsrichtung der Schlauchfolie gerichtet ist, wogegen das Kühlgas über die beiden darüber liegenden Kühllippenabschnitte 49, 50 durch Austrittsöffnungen austritt, die in Abzugsrichtung der Schlauchfolie gerichtet sind. Weiterhin ist eine Einstellvorrichtung 57 zur abschnittsweisen Veränderung des Strömungsquerschnitts der Strömungskanäle 8 gezeigt.

Die Figur 11 zeigt eine erfindungsgemäße Kühlvorrichtung gemäß einer dritten Ausführungsform der vorliegenden Erfindung. Im Unterschied zu den beiden in den Figuren 1 bis 3 und den Figuren 6 bis 8 gezeigten Ausführungsformen der Kühlvorrichtung weist ein in der Figur 8 gezeigter Kühlgasring 51 mehrere der Zulaufkanäle 10 auf. Dabei sind gleiche Einzelheiten mit gleichen Bezugszeichen versehen wie in den Figuren 1 bis 10.

Die, hier beispielhaft mit sechs dargestellten, Zulaufkanäle 10 setzen einzeln von außen zumindest in etwa tangential an ein Ringgehäuse 52 an. Das Ringgehäuse 52 weist ebenfalls eine konzentrisch zu der Mittelachse X angeordnete Ringdüse 3 auf, welche die zentrale Ausnehmung 4 des Ringgehäuses 52 umschließt. Die Zulaufkanäle 10 weisen, hier sechs, Zulaufstutzen 21 auf und münden über die Einlauföffnungen 9 in den innenliegenden Ringkanal 53. Die Zulaufkanäle 10 weisen ebenfalls ein zunächst zylindrisches Profil mit einem runden Querschnitt auf, das kontinuierlich in einen rechteckigen Querschnitt mit abgerundeten Ecken übergeht.

In jedem der Zulaufstutzen 21 ist eine der Strömungsleiteinrichtungen 16 eingesetzt, um das durch den jeweiligen Zulaufkanal 10 einströmende Kühlgas vor dem Eintritt in den Ringkanal 52 in eine Rotation um die jeweilige Strömungsachse A zu versetzen. Auf diese Weise wird das durch die Zulaufkanäle 10 nachströmende Kühlgas mit der Restströmung 13 an Kühlgas durchmischt. Aufgrund der Gemeinsamkeiten hinsichtlich der Wirkweise der Strömungsleiteinrichtung 16 wird auf die vorstehende Beschreibung zu Kühlringen 1 mit nur einem Zulaufkanal 10 Bezug genommen.

### Bezugszeichenliste

- 1: Kühlgasring
- 2: Ringgehäuse
- 3: Ringdüse
- 4: Ausnehmung
- 5: Ringkanal
- 6: Strömungsgleichrichteranordnung
- 7: Stegwandung
- 8: Strömungskanal
- 9: Einlauföffnung
- 10: Zulaufkanal
- 11: Endbereich
- 12: Gehäusezunge
- 13: Durchgangsspalt
- 14: Restströmung
- 15: Anfangsbereich
- 16: Strömungsleiteinrichtung
- 17: Zulaufströmung
- 18: Randbereich
- 19: Leitelement
- 20: Ringkörper
- 21: Zulaufstutzen
- 22: Durchgangsöffnung
- 23: Ringplatte
- 24: Ringtrog
- 25: Ringteile
- 26: Kühllippenhalter
- 27: Fundament
- 28: Extruder
- 29: Aufgabetrichter
- 30: Aufgabetrichter
- 31: Folienblaskopf
- 32: Extrusionsdüse
- 33: Gasleitanordnung
- 34: Gasabsaugrohr
- 35: Folienschlauch
- 36: Frostgrenze
- 37: Schlauch
- 38: Gebläse
- 39: Kalibriervorrichtung
- 40: Rollen
- 41: Flachlegevorrichtung
- 42: Rollen
- 43: Flachfolie
- 44: Abzugsvorrichtung
- 45: Abzugsrollen
- 46: Wärmeisolierscheibe
- 47: Halterung
- 48: Kühllippenabschnitt
- 49: Kühllippenabschnitt
- 50: Kühllippenabschnitt
- 51: Kühlgasring
- 52: Ringgehäuse
- 53: Ringkanal
- 54: Vorderkante
- 55: Hinterkante
- 56: Anlagefläche
- 57: Einstellvorrichtung
- 58: Linie
- 59: Kühllippen

- α: Winkel
- F: Strömungsrichtung
- R: Radialströmung
- A: Längsachse / Strömungsachse
- X: Mittelachse

## Patentansprüche

1. Kühlvorrichtung zur Außenkühlung eines innendruckbeaufschlagten Folienschlauches bei der Herstellung von Blasfolien aus thermoplastischem Kunststoff, umfassend:
einen Kühlgasring (1; 51) mit einem Ringgehäuse (2; 52), das eine konzentrisch zu einer Mittelachse (X) angeordnete Ringdüse (3), die zum Folienschlauch (35) hin offen ausgebildet ist, und wenigstens einen sich in Umfangsrichtung um die Mittelachse (X) erstreckenden innenliegenden Ringkanal (5; 53), der radial innen zur Ringdüse (3) hin offen ausgebildet ist, aufweist,
wobei an dem Ringgehäuse (2; 52) mindestens ein Zulaufkanal (10) zur Zufuhr von Kühlgas angesetzt ist, der mit dem Ringkanal (5; 53) verbunden ist, und
wobei die Kühlvorrichtung ausschließlich den einen Zulaufkanal (10) aufweist, und wobei das Ringgehäuse (2) zur Einleitung von Kühlgas in den Ringkanal (5) ausschließlich eine einzige Einlauföffnung (9), an die der Zulaufkanal (10) mit einem am Ringgehäuse (2) angesetzten Zulaufstutzen (21) angebunden ist, aufweist, oder
wobei das Ringgehäuse (52) zur Einleitung von Kühlgas in den Ringkanal (5) mehrere Einlauföffnungen (9), an die jeweils einer der Zulaufkanäle (10) mit jeweils einem am Ringgehäuse (52) angesetzten Zulaufstutzen (21) angebunden ist, aufweist, wobei die Zulaufstutzen (21) in Umfangsrichtung um die Mittelachse (X) gleichsinnig in den Ringkanal (53) einlaufend angesetzt sind,
**dadurch gekennzeichnet,**
**dass** die Kühlvorrichtung weiterhin mindestens eine Strömungsleiteinrichtung (16) mit feststehenden und/oder einstellbaren Leitelementen (19) in dem mindestens einen Zulaufkanal (10) aufweist, wobei die mindestens eine Strömungsleiteinrichtung (16) derart angeordnet und ausgebildet ist, dass beim Strömen eines Kühlgases durch die Strömungsleiteinrichtung (16) zumindest ein Teilstrom eines durch den zumindest einen Zulaufkanal (10) in den Ringkanal (5; 53) einströmenden Kühlgases vor dem Einströmen in den Ringkanal (5; 53) in Rotation um eine Strömungsachse (A) versetzt wird.

2. Kühlvorrichtung nach Anspruch 1, **dadurch gekennzeichnet,**
**dass** die mindestens eine Strömungsleiteinrichtung (16) zur Erzeugung der Rotation um die Strömungsachse (A) in einem Randbereich (18) des zumindest einen Zulaufkanals (10) ausgebildet ist.

3. Kühlvorrichtung nach Anspruch 1 oder 2, **dadurch gekennzeichnet,**
**dass** die mindestens eine Strömungsleiteinrichtung (16) als eigenständiges Bauteil ausgebildet ist.

4. Kühlvorrichtung nach Anspruch 1, **dadurch gekennzeichnet,**
**dass** zumindest eine Teilmenge der Leitelemente (19) in Umfangsrichtung um die Strömungsachse (A) verteilt angeordnet ist und/oder zumindest eine Teilmenge der Leitelemente (19) in Strömungsrichtung hintereinander angeordnet ist.

5. Kühlvorrichtung nach Anspruch 1 oder 4, **dadurch gekennzeichnet,**
**dass** zumindest eine Teilmenge der Leitelemente (19) plattenförmig oder bogenförmig gekrümmt ausgebildet ist.

6. Kühlvorrichtung nach einem der Ansprüche 1 bis 5, **dadurch gekennzeichnet,**
**dass** zumindest eine Teilmenge der Leitelemente (19) mit einem Anstellwinkel (a) von etwa 30° bis 60° zur Strömungsachse (A) angeordnet ist.

7. Kühlvorrichtung nach einem der Ansprüche 1 bis 6, **dadurch gekennzeichnet,**
**dass** die mindestens eine Strömungsleiteinrichtung (16) zumindest einen rohrförmigen Grundkörper (20) aufweist, an dem zumindest eine Teilmenge der Leitelemente (19) gehalten ist.

8. Kühlvorrichtung nach einem der Ansprüche 1 bis 7, **dadurch gekennzeichnet,**
**dass** die mindestens eine Strömungsleiteinrichtung (16) in dem zumindest einen Zulaufkanal (10) feststehend angeordnet ist.

9. Kühlvorrichtung nach Anspruch 1, **dadurch gekennzeichnet,**
**dass** die mindestens eine Strömungsleiteinrichtung (16) in oder an dem zumindest einen Zulaufstutzen (21) angeordnet ist.

10. Kühlvorrichtung nach einem der Ansprüche 1 bis 9, **dadurch gekennzeichnet,**
**dass** der zumindest eine Zulaufkanal (10) wenigstens einen Schlauch (37) umfasst, wobei die mindestens eine Strömungsleiteinrichtung (16) in dem wenigstens einen Schlauch (37) und/oder zwischen zwei benachbarten Schläuchen (37', 37") oder zwischen dem wenigstens einen Schlauch (37) und dem Ringgehäuse (2; 52) angeordnet ist.

11. Kühlvorrichtung nach einem der Ansprüche 1 bis 10, **dadurch gekennzeichnet,**
**dass** zwischen dem Ringkanal (5; 53) und der Ringdüse (3) eine Strömungsgleichrichteranordnung (6) angeordnet ist, die durch mehrere radial ausgerichtete und umfangsverteilte Strömungskanäle (8) gebildet ist.

## Claims

1. Cooling device for the external cooling of a film tube subjected to internal pressure in the production of blown films of thermoplastic material, comprising:
a cooling gas ring (1; 51) comprising a ring housing (2; 52) with a ring nozzle (3), which is arranged concentrically to a central axis (X) and is open towards the film tube (35), and at least one inner ring channel (5; 53) extending in circumferential direction about the central axis (X) and being open radially inwards towards the ring nozzle (3),
wherein at least one feed channel (10) for supplying cooling gas is attached to the ring housing (2; 52), the at least one feed channel (10) being connected to the ring channel (5; 53), and
wherein the cooling device comprises only one of the feed channel (10), and the ring housing (2) comprises only one of the feed opening (9) for the introduction of cooling gas into the ring channel (5) wherein the feed channel (10) is connected to the feed opening (9) via a feed connector (21) attached to the ring housing (2), or
wherein the ring housing (52) comprises a plurality of feed openings (9) for introducing cooling gas into the ring channel (5), each one of the feed openings (9) is connected to one of the feed channels (10) via a feed connector (21), respectively, wherein the feed connectors (21) are attached to the ring housing (52), the feed connectors (21) all enter the ring channel (53) in the same direction with regard to the circumferential direction about the central axis (X),
**characterized in**
**that** the cooling device further comprising at least one flow guiding device (16) comprising fixed and/or adjustable guide elements (19) in the at least one feed channel (10), wherein the at least one flow guiding device (16) is arranged and designed such that, when a cooling gas flows through the flow guiding device (16), at least a partial flow of the cooling gas is set in rotation about a flow axis (A) prior to flowing into the ring channel (5; 53).

2. Cooling device according to claim 1, **characterized in**
**that** the at least one flow guiding device (16) is formed in a peripheral area (18) of the at least one feed channel (10) in order to generate the rotation of the cooling gas about the flow axis (A).

3. Cooling device according to claim 1 or 2, **characterized in**
**that** the at least one flow guiding device (16) is designed as an autonomous component.

4. Cooling device according to claim 1, **characterized in**
**that** at least a subset of the guide elements (19) is arranged in circumferential direction about the flow axis (A) and/or at least a subset of the guide elements (19) is arranged one behind the other in flow direction.

5. Cooling device according to claim 1 or 4, **characterized in,**
**that** at least a subset of the guide elements (19) is designed plate-shaped or arc-shaped.

6. Cooling device according to one of the claims 1 to 5, **characterized in**
**that** at least a subset of the guide elements (19) is arranged with a setting angle (a) of approximately 30° to 60° with respect to the flow axis (A).

7. Cooling device according to one of the claims 1 to 6, **characterized in**
**that** the at least one flow guiding device (16) comprises at least one tubular base body (20) on which at least a subset of the guiding elements (19) is held.

8. Cooling device according to one of the claims 1 to 7, **characterized in,**
**that** the at least one flow guide device (16) is fixedly arranged in the at least one feed channel (10).

9. Cooling device according to claim 1, **characterized in**
**that** the at least one flow guiding device (16) is arranged in or on the at least one feed connector (21).

10. Cooling device according to one of the requirements 1 to 9, **characterized in**
**that** the at least one feed channel (10) comprises at least one hose (37), wherein the at least one flow guiding device (16) is arranged in the at least one hose (37) and/or between two adjacent hoses (37', 37") or between the at least one hose (37) and the ring housing (2; 52).

11. A cooling device according to any one of claims 1 to 10, **characterized in**
**that** a flow straightener arrangement (6) is arranged between the ring channel (5; 53) and the ring nozzle (3), the flow straightener arrangement (6) being formed by a plurality of radially aligned and circumferentially distributed flow channels (8).

## Revendications

1. Dispositif de refroidissement pour le refroidissement extérieur d'un tube flexible en feuille sollicité par une pression intérieure lors de la fabrication de feuilles soufflées en matière thermoplastique, comprenant:
un anneau de gaz de refroidissement (1; 51) avec un boîtier annulaire (2; 52), qui comporte une buse annulaire (3) disposée concentriquement par rapport à un axe médian (X), qui est constituée ouverte vers le tube flexible en feuille (35), et au moins un conduit annulaire (5; 53) situé à l'intérieur s'étendant dans le sens périphérique autour de l'axe médian (X), qui est constitué ouvert radialement à l'intérieur vers la buse annulaire (3),
sachant qu'au boîtier annulaire (2; 52) est appliqué au moins un conduit d'arrivée (10) pour l'alimentation de gaz de refroidissement, qui est relié au conduit annulaire (5; 53), et
sachant que le dispositif de refroidissement comporte exclusivement un conduit d'arrivée (10), et sachant que le boîtier annulaire (2) pour l'introduction de gaz de refroidissement dans le conduit annulaire (5) comporte exclusivement une ouverture d'entrée unique (9) à laquelle est raccordé le conduit d'arrivée (10) avec une tubulure d'arrivée (21) appliquée au boîtier annulaire (2), ou
sachant que le boîtier annulaire (52) pour l'introduction de gaz de refroidissement dans le conduit annulaire (5) comporte plusieurs ouvertures d'entrée (9), auxquelles est raccordé respectivement un des conduits d'arrivée (10) avec respectivement une tubulure d'arrivée (21) appliquée au boîtier annulaire (52), sachant que les tubulures d'arrivée (21) sont appliquées pénétrant de même sens dans le conduit annulaire (53) dans le sens périphérique autour de l'axe médian (X),
**caractérisé en ce que**
le dispositif de refroidissement comporte en plus au moins un dispositif de guidage d'écoulement (16) avec des éléments de guidage (19) fixes et/ou réglables dans au moins un conduit d'arrivée (10), sachant qu'au moins un dispositif de guidage d'écoulement (16) est disposé et constitué de telle manière que lors de l'écoulement d'un gaz de refroidissement à travers le dispositif de guidage d'écoulement (16) au moins une partie du flux d'un gaz de refroidissement affluant par au moins un conduit d'arrivée (10) dans le conduit annulaire (5; 53) est déplacée avant l'entrée dans le conduit annulaire (5; 53) en rotation autour d'un axe d'écoulement (A).

2. Dispositif de refroidissement selon la revendication 1, **caractérisé en ce qu'**
au moins un dispositif de guidage d'écoulement (16) est constitué dans une zone de bordure (18) d'au moins un conduit d'arrivée (10) pour produire la rotation autour de l'axe d'écoulement (A).

3. Dispositif de refroidissement selon la revendication 1 ou 2, **caractérisé en ce qu'**
au moins un dispositif de guidage d'écoulement (16) est constitué sous la forme d'un composant autonome.

4. Dispositif de refroidissement selon la revendication 1, **caractérisé en ce qu'**
au moins une quantité partielle des éléments de guidage (19) est disposée répartie dans le sens périphérique autour de l'axe d'écoulement (A) et/ou les éléments de guidage (19) sont disposés dans au moins une quantité partielle les uns derrière les autres dans un sens d'écoulement.

5. Dispositif de refroidissement selon la revendication 1 ou 4, **caractérisé en ce qu'**
au moins une quantité partielle des éléments de guidage (19) est constituée courbée en forme de plaques ou d'arc.

6. Dispositif de refroidissement selon l'une quelconque des revendications 1 à 5, **caractérisé en ce qu'**
au moins une quantité partielle des éléments de guidage (19) est disposée avec un angle d'incidence (α) d'environ 30° à 60° par rapport à l'axe d'écoulement (A) .

7. Dispositif de refroidissement selon l'une quelconque des revendications 1 à 6, **caractérisé en ce qu'**
au moins un dispositif de guidage d'écoulement (16) comporte au moins un corps de base tubulaire (20), sur lequel est maintenue au moins une quantité partielle des éléments de guidage (19).

8. Dispositif de refroidissement selon l'une quelconque des revendications 1 à 7, **caractérisé en ce qu'**
au moins un dispositif de guidage d'écoulement (16) est disposé fixement dans au moins un conduit d'arrivée (10) .

9. Dispositif de refroidissement selon la revendication 1, **caractérisé en ce qu'**
au moins un dispositif de guidage d'écoulement (16) est disposé dans ou sur au moins une tubulure d'arrivée (21) .

10. Dispositif de refroidissement selon l'une quelconque des revendications 1 à 9, **caractérisé en ce qu'**
au moins un conduit d'arrivée (10) comprend au moins un tuyau (37), sachant qu'au moins un dispositif de guidage d'écoulement (16) est disposé dans au moins le tuyau (37) et/ou entre deux tuyaux voisins (37', 37") ou entre au moins le tuyau (37) et le boîtier annuaire (2; 52) .

11. Dispositif de refroidissement selon l'une quelconque des revendications 1 à 10, **caractérisé en ce qu'**
entre le conduit annulaire (5; 53) et la buse annulaire (3) est disposé un système redresseur d'écoulement (6), qui est formé par plusieurs conduits d'écoulement (8) orientés radialement et répartis sur la périphérie.
